Europäisches Patentamt

European Patent Office

Office européen des brevets

(11) Publication number: **0 481 081 A1**

## EUROPEAN PATENT APPLICATION
### published in accordance with Art. 158(3) EPC

(21) Application number: 91901907.5

(22) Date of filing: 11.01.91

(86) International application number:
PCT/JP91/00014

(87) International publication number:
WO 91/10561 (25.07.91 91/17)

(51) Int. Cl.5: **B32B 5/18**, B32B 7/02

(30) Priority: **12.01.90 JP 4899/90**

(43) Date of publication of application:
**22.04.92 Bulletin 92/17**

(84) Designated Contracting States:
**DE FR GB NL**

(71) Applicant: NIPPON PETROCHEMICALS CO.,
LTD.
3-1, Uchisaiwai-cho 1-chome Chiyoda-ku
Tokyo 100(JP)

(72) Inventor: FUKUI, Hirofumi
4-49-9, Hino, Kounan-ku,
Yokohama-shi Kanagawa-ken(JP)
Inventor: SUZUKI, Akira
3-4-2, Ookubo, Kounan-ku
Yokohama-shi Kanagawa-ken(JP)

(74) Representative: Strehl, Schübel-Hopf,
Groening
Maximilianstrasse 54 Postfach 22 14 55
W-8000 München 22(DE)

(54) LAMINATE, HEAT-SHRINKING LAMINATE FILM, AND FOAMED LAMINATE.

(57) A laminate composed of at least two layers comprising a barrier base material and an ethylene copolymer layer containing carbon-to-carbon unsaturated bonds and optionally further a polyolefin composition layer; a heat-shrinking laminate film; and a laminate and a heat-shrinking foamed laminate film each further containing a foamed layer. The laminate is excellent in heat sealability and oil resistance, is optionally cross-linked dependent on the purpose of use, and is useful not only as a nonshrinking packaging material for chilled beef but also as a food packaging material for conventional sleeve or boiling packaging. Since the heat-shrinking laminate film contains an ethylene copolymer which can be cross-linked efficiently, it can be cross-linked with an ionizing radiation under a milder condition in a shorter time than before, thus providing a high-performance laminate more economically and safely without causing the deterioration of the barrier base material. The laminate and heat-shrinking foamed laminate film containing the foamed layer are excellent in heat insulation, shock absorption and flexibility while retaining high barrier properties, heat sealability and high shrinkability.

Field of the Invention

The present invention is related to a composite, heat shrinkable composite film and foamed composite having excellent barrier and curing properties useful as chilled beef and retort food packaging materials for processed meat with bones or a raw meat, processed raw meat products such as ham and sausages, dairy products, processed seafood products such as boiled fish paste, fishery products, chilled processed foods, pickles, daily dishes, and the like

Background of the Invention

Nowadays, chilled beef packages and retort food packages have been prevailing as packages for processed meat with bones or raw meat, or processed meat products such as ham and sausages.

The term "chilled beef package" as used herein means a package of a piece of edible meat on a meat holder which is produced by a process comprising cutting a carcass or a large block of meat to pieces and packing the pieces airtightly in vacuo within a plastic bag.

There are two types of plastic bags, that is, the shrinkable and the nonshrinkable.

In the shrinkable type bag, the plastic is required to have effective properties such as high barrier property, low temperature resistance, heat seal strength, and high shrinkability to cover contents airtightly with a shrinked plastic bag by means of a shrinker using a hot shower at 75 to 95°C.

In the nonshrinkable type of bag, a vacuum packed meat is weighed directly and packed in a carton, or is packed in a carton after fusion of the inner wall of the bag by passing it through a heated tunnel being injected with a hot air at about 190 °C.

Required conditions for such chilled beef packaging process are as follows:
(a) capability of preventing environment pollution by drips, loss of weight, dehydration and contamination of the contents.
(b) capability of preventing increase of bacteria.
(c) capability of preventing damage during handling and transportation.

Required main properties for the plastics used for such meat packaging include barrier property, seal strength, oil resistance, transparency, low temperature resistance, and the like.

As a food packaging technique used to produce retort-packed food products such as hamburger, ham, Vienna sausages, there may be employed a low temperature system comprising packaging a piece of meat, sterilizing the package at 120 to 140°C, and rapidly cooling. In such case, the airtightened packages are usually subjected to steam treatment to disinfect and cooled rapidly. The packaging materials are required to have effective heat resistance and heat seal strength to stand such disinfection by boiling.

As for packaging materials, a composite film constituted of a barrier film made of a resin such as polyvinylidene chloride (PVDC), or saponified ethylene vinyl acetate copolymer (EVOH) as a core layer in between two outerlayers of an ethylene-vinyl acetate copolymer (EVA) or of an irradiated EVA resin or of an ionomer resin has been provided.

In heat shrinkable films, films are usually cured by irradiation of ionic radiaton such as $\beta$-rays, $\gamma$-rays neutrons (see Japanese Provisional Publication No. 34565-47, 43889-52 ).

However, when the aforesaid composite is cured by irradiation of ionic radiation, the barrier substrate layer of PVDC decomposes and the barrier property impairs with evolution of a gas unpreferably (see Japanese Provisional Publication No. 3179-54, 89945-56 and 83752-58).

To improve these disadvantages, a composite film constituted of a cured polyolefin layer laminated with a barrier substrate layer of a PVDC resin or an EVOH resin has been provided.

The problems of this type of composite are in its expensive production cost and irregularity of its properties.

Further, a composite film having at least a foamed layer have been provided as a material for sleeve packaging of glass containers and bottles to prevent damage from breaking. However, its curing and foaming capabilities are still insufficient in this case.

Disclosure of the Invention

The first object of the present invention is to provide a composite having an excellent oxygen barrier property, seal strength, oil resistance and transparency.

The second object of the invention is to provide a high shrinkable composite film having an excellent curing property capable of being cured by a low dose of irradiation without impairing the barrier property, seal strength, oil resistance and transparency of the conventional shrinkable film used for chilled beef packaging and the like.

The third object of the present invention is to provide a heat shrinkable foamed composite film having shock absorbing, insulating and flexible properties useful as coating and protecting materials.

The first aspect of the invention is directed to a composite constituted of a barrier layer, and a layer of an ethylene copolymer having carbon-carbon unsaturated bonds o r of a composition comprising said ethylene copolymer and a polyolefin.

The second aspect of the invention is directed to a heat shrinkable composite film constituted of a barrier layer, and a layer of an ethylene copolymer having carbon-carbon unsaturated bonds or of a composition comprising the same and a polyolefin.

The third aspect of the invention is directed to a foamed composite or a heat shrinkable foamed composite film.

Examples of the barrier substrate layer of the present invention include a layer of a barrier resin such as vinylidene chloride resins, saponified ethylene-vinyl acetate copolymer resins, polyester resins, polyamide resins, acrylonitrile resins, and the like; a plastic composite which is fabricated by aluminum vapor deposition; and a metallic foil such as aluminum foils.

Examples of the preferable vinylidene chloride resins of the present incentin include a copolymer resin of vinylidene chloride (65 to 90 % by wt.) with at least one of copolymerizable monomers (35 to 5 % by wt.); an ethylene-vinyl alcohol copolymer (EVOH) (20 to 80 % by mole of ethylene) having a degree of saponification of 50 % by mole or more.

Various additives such as a plasticizer, thermal stabilizer and lubricant may be further blended. Conventional polyester resins, polyamide resins such as Nylon-6, acrylonitrile resins, aluminum deposited films and metallic foils such as aluminum foils may be employed as the barrier substrate layer.

Examples of the ethylene copolymer resins used in the present invention include a copolymer resin of 95 to 99.99 % by weight of ethylene and 0.01 to 5 % by weight of a monomer having at least two carbon-carbon unsaturated bonds such as (metha) allyl acrylate and/or (metha) vinyl acrylate; a copolymer resin of 50 to 99.99 % by weight of ethylene, 0.01 to 5 % by weight of a monomer having at least two carbon-carbon unsaturated bonds such as (metha) allyl acrylate and/or (metha) vinyl acrylate, and 0 to 49.9 % by weight of an other copolymerizable unsaturated monomer; a resin prepared by addition polymerization of a monomer having at least two carbon-carbon unsaturated bonds such as (metha) allyl acrylate and/or (metha) vinyl acrylate with an ethylene polymer such as ethylene-$\alpha$-olefin copolymer, ethylene vinyl acetate copolymers, ethylene-(meth) acrylic alkyl ester copolymers.

Examples of the other copolymrizable unsaturated monomers of the present invention include an $\alpha$-olefin such as propylene, 1-butene, styrene or the derivatives, unsaturated carbonic acid such as acrylic acid, methacrylic acid, maleic acid, fumaric acid, maleic anhydride, itaconic anhydride and the like, unsaturated carboxylic esters such as methyl acrylate, methyl methacrylate, ethyl acrylate, ethyl methacrylate, propyl acrylate, propyl methacrylate, isopropyl acrylate, isopropyl methacrylate, n-butyl acrylate, n-butyl methacrylate, cyclohexyl acrylate, cyclohexyl methacrylate, lauryl acrylate, lauryl methacrylate, stearyl acrylate, stearyl methacrylate, maleic acid monomethyl ester, maleic acid monoethyl ester, maleic acid diethyl ester, fumaric acid monoethyl ester, glycidyl acrylate, glycidyl methacrylate, vinyl esters such as vinyl propionate, vinyl acetate, vinyl capronate, vinyl caprinate, vinyl laurate, vinyl stearate, vinyl trifluoroacetate, and the like. Of these, (meth) acrylic alkyl esters and vinyl esters are preferred with the most prferred ones being ethyl acrylate, methyl methacrylate and vinyl acetate.

Examples of ethylene copolymer resins having carbon-carbon unsaturated bonds of the present invention include ethylene-(metha) allyl acrylate copolymer resins, ethylene-(metha) vinyl acrylate copolymer resins, ethylene-(metha) allyl acrylate-vinylacetate coplymer resins, ethylene-(metha) vinyl acrylate-vinyl acetate coplymer resins, ethylene-(metha) allyl acrylate-ethyl acrylate copolymer resins, ethylene-(metha) vinyl acrylate-ethyl acrylate copolymer resins, and mixtures therof. Metallic salts such as Na-, K-, Ca-, Li-, Al-, Mg-, Zn-salt of these copolymers such as ionomers may be employed.

Among them, copolymers manufactured by a conventional high-pressure process are employed preferably.

When the content of the monomer having at least two carbon-carbon unsaturated bonds, such as (metha) allyl acrylate and/or (metha) vinyl acrylate, is 0.01 % by weight or less, the degree of curing by ionic radiation declines, and it becomes difficult to obtain a product having high shrinkable property, and inversely, when it is in excess 5% by weight, transparency of the product deteriorates unpreferably.

In the composites of the present invention, a polyolefin resin may be blended with the ethylene copolymer resin having unsaturated bonds to provide the copolymer with other functionalities such as transparency, flexibility, low temperature resistance, heat seal resistance and the like.

Examples of the polyolefin resins include high density polyethylenes, medium density polyethylenes, low density polyethylenes (LDPE), linear low density polyethylenes (LLDPE), ultra low density polyethylenes (ULDPE), ethylene-vinyl ester copolymers such as ethylene-vinyl acetate copolymers (EVA); ethylene- $\alpha$, $\beta$-unsaturated carboxylic acid copolymers or the derivatives such as ethylene-acrylic acid ester copolymers (EEA), olefin-type rubbers such as ethylene-propylene random copolymer rubbers (EPR), etylene-propylene-diene random copolymers such as propylene-ethylene random copolymers, propylene-1-butene random copolymers, and mixtures thereof.

Among them, for food packaging materials such as chilled beef packaging or retort packaging materials which are required to have flexibility, transparency, heat seal strength, elongation, low temperature resistance, and highly shrinkable property, a nonrigid polyolefin resin such as LDPE, LLDPE, ULDPE, EVA, EEA, EPR and EPDM is preferred to be blended with the aforesaid ethylene copolymer resin having unsaturated bonds.

Although any blending ratio may be employed, the carbon-carbon unsaturated unit is in an amount from 0.01 to 5 % by weight in the composition.

Especially, when regarding transparency and stretching properties as important factors, a nonrigid polyolefin such as ULDPE, EVA or EEA may be blended preferably in an amount from 99 to 50 % by weight with 1 to 50 % by weight of the ethylene copolymer having unsaturated bonds.

The term "ultra low density polyethylene (ULDPE)" means a polyethylene having a density of 0.86 to 0.910 g/cm$^3$ and intermediate properties between those of ethylene-$\alpha$-olefin copolymer rubbers and linear low density polyethylenes (LLDPE).

ULDPE is a specific ethylene- $\alpha$-olefin copolymer resin having a density of 0.860 to 0.910 g/cm$^3$, an insoluble material in boiling hexane of more than 10 % by weight, and a preferable maximum peak temperature ($T_m$) measured by means of DSC apparatus of more than 60 °C and high crystalline regions characteristic of LLDPE and noncryltalline regions characteristic of ethylene- $\alpha$-olefin copolymer rubbers.

ULDPE resins are prepared by Ziegler process in the presence of a Ziegler catalyst system containing a solid catalyst component comprising Ti and/or V at least and an organic aluminium compound.

Such resins are suitable for use in the present invention because the excellent mechanical properties and thermal stability characteristic of the crystalline regions are well compatible with the rubbery elasticity and high impact resistance in the low temperature characteristic of the noncrystalline regions.

Exmples of the $\alpha$-olefins include propylene, 1-butene, 4-methylpentene-1, 1-hexene, 1-octene, 1-decene, and the like.

The term "low density polyethylene (LDPE)" means polyethylenes having a density of 0.91 to 0.94 g/cm$^3$ and which are manufactured by a high pressure polymerization process.

The term "linear low density polyethylene (LLDPE)" means an ethylene-$\alpha$-olefin copolymer having a density of 0.91 to 0.94 g/cm$^3$ and which are manufactured by the Ziegler process in a low or high pressure.

Examples of the ethylene- $\alpha$, $\beta$-unsaturated carboxylic acid copolymers or derivatives thereof include ethylene $\alpha$, $\beta$-unsaturated carboxylic acid copolymers, ethylene-$\alpha$, $\beta$-unsaturated carboxylic ester copolymers and metallic salts, amides. imides thereof, with the most preferred one being a copolymer of 50 to 99.5 % by weight of ethylene, 0.5 to 50 % by weight of an $\alpha$, $\beta$-unsaturated carboxylic acid or its ester, and 0 to 49.5 % by weight of an other copolymerizable unsaturated monomer.

Examples of the ethylene-vinyl ester copolymers include a copolymer of ethylene with a vinyl ester monomer such as vinyl propionate, vinyl acetate, vinyl capronate, vinyl caprylate, vinyl laurate, vinyl stearate, vinyl trifluoroacetate, with the most preferred one being vinyl acetate.

A copolymer of 50 o 99.9 % by weight of ethylene, 0.5 to 50 % by weight of a vinyl ester, and 0 to 49.5 % by weight of an other copolymerizable unsaturated monomer is preferred.

Examples of these copolymers include ethylene-acrylic acid copolymers, ethylene-methacrylic acid copolymers, ethylene-ethyl acrylate copolymers, ethylene-acrylic acid-ethyl acrylate copolymers, ethylene-vinyl acetate copolymers, ethylene-vinyl acetate- ethyl acrylate copolymers, ethylene glycidyl methacrylate copolymers, ethylene-glycidyl methacrylate-ethyl acrylate copolymers, metallic salts (ionomers), and mixtures thereof.

Examples of the preferable olefin-type rubbers include ethylene-propylene-diene random copolymer rubbers and ethylene-propylene-random copolymer rubbers.

The diene component is selected from the group consisting of ethylidene norbornene, dicyclopentadiene and 1,4-cyclohexadiene.

The Mooney viscosity ($ML_{1+4}$ 100 °C) of the rubberis 10 to 100, with 20 to 90 being preferred. When the viscosity is less than 10, the improvement effect on the tensile strength is insufficient, and inversely, when it is more than 100, the dispersion becomes poor.

Examples of the propylene-type or butene-type nonrigid polyolefins include propylene-$\alpha$-olefin random copolymers, 1-butene-$\alpha$-olefin random copolymers and the like, which are low crystalline or noncrystalline polyolefins manufactured by a Ziegler-type polymerization process.

In the present invention, isobutene rubbers, butadiene rubbers, styrene-butadiene random copolymer rubbers, chloroprene rubbers, nitrile rubbers, styrene-butadiene-styrene block copolymer rubbers, or styrene-isoprene-styrene block copolymer rubbers may be blended optionally.

The first aspect of the invention is directed to a composite constituted of at least two layers, the first one being a barrier substrate layer, the second one being a layer of an ethylene copolymer having carbon-carbon unsaturated bonds or a layer of a composition comprising said ethylene copolymer having unsaturated bonds or a layer of a composition comprising said ethylene copolymer and a polyolefin. The layer of the ethylene copolymer having unsaturated bonds or the layer of the composition comprising said ethylene copolymer and a polyolefin may be cured, if necessary.

In the following examples of the composites of the invention, the polymers are called in short as follows: EVA = ethylene-vinyl acetate copolymer, OPP = oriented polypropylene, E-AMA = ethylene-allyl acrylate copolymer, E-VMA = ethylene vinyl acrylate copolymer, PVDC = polyvinylidene chloride, PA = polyamide, EVOH = saponified ethylenevinyl acetate copolymer, PET = polyester.

Various combinations of the layers of the present invention may be set forth as follows:

(a) E-AMA (E-VMA) / PVDC (PA, EVOH, PET),
(b) E-AMA (E-VMA) / PVCD / EVA,
(c) EVA / E-AMA (E-VMA) / PVCD / E-AMA / EVA,
(d) (E-AMA + ULDPE) / PVCD,
(e) (E-VMA + EVA) / PVCD,
(f) OPP / PVCD / E-AMA,
(g) ULDPE / PA / E-AMA-VA

The layers of E-AMA or E-VMA, and the layer of a composition comprising a polyolefin, and E-AMA or E-VMA may be cured with an organic peroxides or irradiation of ionic radiation, and the like.

These composites of the present invention are not only useful for nonshrinkable-type chilled beef packaging meterials, but also useful for sleeve and boiling packaging materials.

The second aspect of the invention is directed to a heat shrinkable composite film constituted of at least two layers, the first one being a barrier substrate layer and the second one being a layer of an ethylene coolymer having carbon-carbon unsaturated bonds or of a layer of a composition comprising said ethylene copolymer and a polyolefin.

More specifically, said layer comprising an ethylene copolymer, or said layer of a composition comprising the ethylene copolymer and a polyolefin resin has a degree of curing of 5 to 90 %, preferably 10 to 60 %, more preferably 15 to 50 % when cured with a conventional curing agent or with ionic radiation. An oriented film fabricated by uniaxial or biaxial stretching, rolling and/or drawing may be employed optionally.

Although any degree of orientation may be used depending on the extent of curing or shrinkage of the film in terms of the purpose and the uses, it is in a range from 1.1 to 10 times, preferably from 1.5 to 7 times, with a range from 2 to 5 times being more preferred.

Examples of the curing agents of the invention include a free radical-type curing agent such as organic peroxides; a curing agent of natural rubbers or synthetic rubbers such as sulfur or sulfur compounds; a silane compound; a titanate compound; and the like.

Examples of the preferable organic peroxides include hydroperoxid, dicumylperoxide, tert.-butylcumylperoxide, dialkyl (aryl) peroxide, diisopropylbenzenehydroperoxide, dipropionylperoxide, dioctanoylperoxide, benzoylperoxide, peroxysuccinic acid, peroxyketal, 2,5-dimethyl-2,5-di (tert.-butoxy) hexane, tert.-butyloxyacetate, tert.-butyloxyisobutylate, and the like.

Examples of the curing agents of rubbers include flowers of sulfur, desulfurized sulfur, sulfur meal, precipitated sulfur, collidal sulfur, a sulfur compound, selenium and its compounds, an aromatic nitro compound and the like.

Examples of the silane compounds include vinyl trimethoxysilane, vinyl triethoxysilane, vinyltriacetylsilane, vinyl trichlorosilane, and the like.

Examples of the titanate compounds include tetraisopropyl titanate, tetra-n-butyl titanate, tetrakis (2-ethylhxoxy) titanate, ammonium salts of titanium lactate, and the like.

Any amount of the curing agent may be employed so far as it does not impair the mechanical strength or does not give colorations and smell due to severe decomposition of the ethylene copolymer or excessive curing reaction.

Ionic radiation may be carried out by means of an accelerator apparatus, but it is not limited thereto.

In the present invention, the term "rad" is defined as an amount of radiation which consumes 100 ergs of energy per 1 gram of material to be irradiated. M rad is $10^6$ rad. The amount of radiation is in a range from 2 to 20 M rad, preferably 2 to 10 M rad with the most preferable ones being 2 to 6 M rad.

In the present invention, the ethylene copolymer resin has carbon-carbon unsaturatd bonds which makes the copolymer more curable. Therefore, the ethylene copolymer can be cured to an extent that is practically sufficient for the purposes of the invention by employing a small amount of irradiation which does not impair the properties of the barrier layer of the invention. Therefore, the composite of the present invention can be cured by a radiation curing method which radiates through the all layers of the composite comprising two outer layers of the ethylene copolymer which are laminated with a barrier layer.

This method is effective for curing a composite having a barrier layer of PVDC resin as a core which composite has been difficult to be cured through the all layers of the composite constituted of a barrier layer and one or two heat sealable layers.

Up to now, it has not been clear why the present copolymer resin having carbon-carbon unsaturated bonds exhibits such an excellent curing efficiency with the aid of radiation such as $\beta$-rays, $\gamma$-rays, neutrons or ultraviolet rays. But it is supposed that the carbon-carbon unsaturated bonds such as allyl radicals or vinyl radicals present in random in the ethylene copolymer may have an important role for increasing the efficiency.

A heat shrinkable composite film of the present invention has the same constitution of layers in the aforesaid composites of the invention.

The heat shrinkable film of the invention, useful as packaging materials for chilled beef, usually has a thickness of 30 to 150 $\mu$m, preferably 40 to 120 $\mu$m, more preferably 50 to 100 $\mu$m.

As for a method for fabricating the heat shrinkable composite film of the present invention, although any fabricating method may be employed, there may be provided a method comprising fabricating a multilayered film constituted of a barrier layer, and a layer of said ethylene copolymer resin or of a composition comprising the same by means of a T-die technique or multilayer inflation technique in advance, curing the resulting multilayered film, and drawing and/or rolling it to fabricate the heat shrinkable composite film.

The present heat shrinkable composite film may be also fabricated by a method comprising preparing separately a barrier layer and a layer of the ethylene copolymer or of a composition comprising the same, curing, drawing and/or rolling them by extrusion lamination or dry lamination to give the heat shrinkable composite film.

In the present invention, owing to the presence of easily curable ethylene copolymer, it may be possible to cure the composite film after the fabrication steps.

The curing may be carried out at any time, for example, at the same time of the fabrication, after the fabrication or after the steps such as packing or coating.

The third aspect of the present invention is directed to a foamed composite or a heat shrinkable foamed composite film having a foamed layer in the composite. That is, the foamed composite is provided by a fabrication method comprising laminating a foamed layer such as a foamed polyolefin layer with the aforesaid composite or the aforesaid heat shrinkable composite film of the present invention, or by foaming the layer of the ethylene copolymer having carbon-carbon unsaturated bonds or of the layer of a composition comprising said ethylene copolymer.

Of these, the preferred foamed composites are those which are fabricated by foaming the layer of the copolymer or the layer of a composition comprising the same, because they can be cured effectively and are easy to fabricate at a low price.

Further, in the heat shrinkable foamed composite film of the present invention, there may be provided a fabrication method comprising blending a foaming agent and an optional curing agent to the barrier resin, the ethylene copolymer resin or the composition comprising said copolymer, fabricating a multilayered composite or individual films by aforesaid methods, foaming and optional curing, and cooling the resulting composite film to give a heat shrinkable foamed composite film as in conventional methods.

Any foaming agents such as inorganic- or organic-biodegradable, or volatile foaming agents may be employed.

Examples of the inorganic-biodegradable foaming agents include ammonium carbonate, sodium bicarbonate, sodium borohydride, silicone oxyhydride, and the like.

Examples of the organic-biodegradable foaming agents include an azo compound such as 2,2-azobisisobutyronitrile, azohexahydrobenzonitrile, azodicarbonamide, diazoaminobenzene; a sulfohydrazide compound such as benzenesulfohydrazide, benzene-1,3-disulfohydrazide, diphenylsulfone-3,3-sisulfohydrazide, diphenyloxide-4,4-disulfohydrazide; a nitroso compound such as N,N-dinitrosopentamethylenetetramine, N,N-dinitroso-N,N-dimethylterephthalamide; terephthalamide; an azide compound such as p-tert.-butylbenzazide, and the like.

When a foaming agent having a high decomposition temperature is used, a co-foaming agent may be employed optionally to decompose the agent at a temperature suitable for processing the ethylene copolymer resin or a composition comprising the same and a nonrigid polyolefin.

Examples of the auxiliaray co-foaming agents include an urea compound, zinc white, an organo-metallic salt such as lead sulfate tribasic, a metallic soap such as zinc stearate and lead stearate, and mixtures thereof.

Examples of the volatile foaming agents include carbon dioxide gas, propane, methyl ether, $Cl_2$ $F_2$ $CH_3$, butane, ether, petroleum ether, acetone, hexane, and mixtures thereof.

The amount of the foaming agent is in a range from 0.1 to 15 parts by weight, with 1.0 to 10 parts by weight being preferred. When the amount is more than 15 parts by weight, various properties such as foaming, mechanical, shock absorbing, sound-proofing and insulating properties as well as external appearance impair, and the proportion of closed cells decreases and the cost of fabrication increases, and inversely, when the amount is less than 0.1 parts by weight, excellent foamed fabricates can not be obtained unpreferably.

The expansion ratio of the foamed composite films of the invention is in a range from 1.1 to 15 times, preferably 1.5 to 10 times, more preferably 2 to 8 times.

In the heat shrinkable foamed or nonfoamed composite films of the invention, the film shrinkage in one axis length is 10 % or more, preferably 20 % or more.

In the fabrication of the present composites, various adhesives such as maleic anhydride-modified polyolefins, ethylene-glycidyl acrylate copolymers, epoxy-type or urethane-type adhesives may be interlayered in between the barrier layer, and the ethylene copolymer layer or the composition layer comprising the same copolymer. Corona discharge treatment or plasma treatment may be employed optionally.

Any conventional fabrication methods such as blow molding, thermo-forming and injection molding may be used for fabricating containers and trays and the like from the composites of the invention.

In the present copolymer resin or the composition comprising the same copolymer and a polyolefin resin, various additives can be used, in so far as they do not impair the properties of the present composites.

Examples of the usable additives include an anti-static agent, inorganic or organic filler, antioxidant, lubricant, organic or inorganic pigment, ultraviolet inhibitor, dispersant, neutralizing agent, plasticizer, nucleating agent, copper deactivating agent, and the like.

The composites as defined in claims 1 to 3 of the present invention include the following embodiments.

(1) Said barrier substrate layer is a layer of at least a resin which is selected from the group consisting of vinylidene chloride copolymers, ethylene vinyl alcohol copolymers, polyesters, polyamides and acrylonitrile polymers.

(2) said barrier substrate is a metallic film or a metallic foil.

(3) Said ethylene copolymer having carbon-carbon unsaturated bonds is selected from the group consisting of ethylene-allyl (meth) acrylate copolymers, ethylene-vinyl (meth) acrylate copolymers, ethylene-allyl (meth)-acrylate- $\alpha$, $\beta$-unsaturated carboxylic acid copolymers or the derivatives, ethylene-vinyl (meth) acrylate-$\alpha$ , $\beta$-unsaturated carboxylic acid copolymers or the derivatives, ethylene-vinyl (meth) acrylate-vinyl ester copolymers, ethylene-allyl (meth) acrylate-vinyl ester copolymers.

(4) Said ethylene copolymer having carbon-carbon unsaturated bonds or the composition comprising the same is one which is cured.

(5) Said composite is constituted of a barrier layer as a core, and of outer-layer, at least one of which is a layer of an ethylene copolymer having carbon-carbon unsaturated bonds or of a composition comprising the same.

(6) Said nonrigid polyolefin is at least one selected from the group of ultra low density polyethylenes, low density polyethylenes, linear low density polyethylenes, ethylene vinyl ester copolymers, ethylene- $\alpha$, $\beta$-unsaturated carboxylic acid copolymers or the derivatives; olefinic rubbers such as ethylene-propylene random copolymer rubbers, ethylene-propylene-diene random copolymer rubbers $\alpha$-olefin copolymers such as propylene-ethylene random copolymers, and propylene-1-butene random copolymers, and the like.

## Preferred Embodiments of the Invention

While the advantages of the composites according to the present invention will be described in detail hereinbelow in conjunction with the best examples, it is to be noted that the scope of the invention should not be limited to these examples.

Test specimens of Examples 1 to 5 and Reference Examples 1 to 2 were prepared as follows:

The barrier resins, and the ethylene copolymer resins or the compositions comprising the same set forth in Table 1 were individually extruded and a co-extruded cylindrical multilayered composite film was fabricated by means of a ring die. The ratio of thickness and the constitutions of the layers are set forth in Table 2. The resulting cylindrical film is cooled, flattened, and irradiated with an electron beam to give 4 M rad.

## Examples 1 to 5 and Reference Examples 1 to 2

The irradiated cylindrical flat film was heated to a stretching temperature shown in Table 2 in a hot water bath, followed by stretching to an extension ratio of 3 times in the length direction while cooling at an ambient temperature and simultaneous stretching to an extension ratio of 3 times of the diameter.

The properties of the resins which were used are set forth in Table 1. The film constitutions are set forth in Table 2. The test results on the specimens are set forth in Table 3.

Test Methods:

[Gel Fraction]

Square specimens (4.5 x 3 cm) prepared by cutting a blown film with a thickness of 30 $\mu$m prepared by an uniaxial extruder were irradiated with an electron beam to give 4 M rad.

The specimens were extracted with xylenes at 120°C for 10 hours, followed by washing with a large amount of acetone. The gel fraction (%) can be calculated as follows:

$$\frac{\text{the weight of film after extraction}}{\text{the weight of film before extraction}} \times 100$$

[MFR and Density]

JIS K 6760-81

[Melting Point]

Differential Scanning Calorimetry Method (10 °C / min.)

[Heat shrinkage (%)]

A square test film (5 x 4cm) were shrinked in a hot water at 90 °C for 1 mimute in a relaxation state. The average shrinkage (%) of 20 sheets in the length and width directions respectively were reported, with 30 % or more being preferred.

[Oil Resistance]

A test film tight-stretched on a frame was coated with lard and immersed in a hot water at 90°C. The presence of suffered damages and other changes on the outer surfaces were observed and reported as properties for oil resistance.

[Heat Seal Resistance]

A vacuum packed roast pork was immersed in a hot water at 90 °C for 10 minutes, and the number of ruptured packages were reported, with the preferred number being less than one ruptured package per 10 packages.

Table 1

| No. | Polymers | MFR (g/10min.) | Haze (30 $\mu$m) | Density (g / cm³) | Vinyl Acetate Conc. (%) | Allyl Methacrylate Conc. (%) | Melting Point of Crystalline Region (℃) | Gel Fraction (%) |
|---|---|---|---|---|---|---|---|---|
| A | PVDC *1 | - | - | - | - | - | - | - |
| B | EVOH *2 | 5.8 | - | 1.140 | - | - | 160 | - |
| C | VLDPE *3 | 1.0 | 3 | 0.906 | - | - | 120 | 16 |
| D | EVA *4 | 2.0 | 5 | 0.929 | 6.0 | - | 105 | 26 |
| E | EVA *4 | 2.0 | 3 | 0.932 | 10.0 | - | 97 | 33 |
| F | E-AMA *5 | 1.5 | 6 | 0.922 | - | 0.3 | 109 | 45 |
| G | E-AMA *5 | 1.8 | 6 | 0.923 | - | 1.0 | 109 | 57 |
| H | E-AMA-VA *6 | 1.7 | 4 | 0.932 | 10.0 | 0.3 | 98 | 61 |
| I | E-AMA-VA *6 | 2.2 | 4 | 0.932 | 10.0 | 0.5 | 98 | 66 |
| J | EVA *4 | 3.0 | - | 0.938 | 15.0 | - | 98 | - |

*1 : A composition of 100 parts of a copolymer (VDC / VC = 80 / 20) and 0.5 parts of epoxy soybean oil

*2 : Trade name EVAL (KURARAY Co. Ltd.)

*3   Trade name NISSEKI SOFTREX (Nippon Petrochemicals Co. Ltd.)

+4   Trade name NISSEKI REXLON  (Nippon Petrochemicals Co. Ltd.)

*5   A copolymer of ethylene - allyl methacrylate copolymer

*6   A copolymer of ethylene - allyl methacrylate-vinyl acetate copolymer

EP 0 481 081 A1

Table 2

| | Constitution of layer (thickness ; $\mu$m) | | | | | Temp. of Hot Bath |
|---|---|---|---|---|---|---|
| | Outer layer (A) | Adhesive layer | Core layer | Adhesive layer | Outer layer (B) | (°C) |
| Eamples 1 | F (15) | J (2) | A (10) | J (2) | F (20) | 90 - 92 |
| 2 | G (12) | J (1) | A (10) | J (1) | G (25) | 90 - 92 |
| 3 | H (15) | J (2) | A (28) | J (2) | H (30) | 91 - 93 |
| 4 | I (10) | J (2) | B (4) | J (2) | I (15) | 92 - 94 |
| 5 | G/C=3/7(15) | J (1) | A (8) | J (1) | G/C=3/7(20) | 95 - 98 |
| Reference Example 1 | D (20) | J (2) | A (10) | J (2) | D (26) | 90 - 92 |
| 2 | E (15) | J (2) | A (8) | J (2) | E (33) | 90 - 92 |

Table 3

| | Stretchability | Heat shrinkage | Oil Resistance Outer Layer (A) | Oil Resistance Outer layer (B) | Heat Seal Resistance | Gas Barrier (cc/cm²-day-atm.) |
|---|---|---|---|---|---|---|
| Examples 1 | ○ | good | good | good | good | 42 |
| 2 | ○ | good | good | good | good | 42 |
| 3 | ○ | good | good | good | good | 15 |
| 4 | ○ | good | good | good | good | 60 |
| 5 | ○ | good | good | good | good | 53 |
| Reference Examples 1 | ○ | good | no good | no good | no good | 42 |
| 2 | ○ | good | no good | no good | no good | 53 |

Stretchability : ○ = possible to stretch

Heat Shrinkage : good = > 30 %

Oil Resistance: good = good at 90℃ for 10 min., no good = poor at 90℃ for 3 sec.

Heat Seal Resistance: good = good at 90℃ for 10 min., no good = poor at 90 ℃ for 10 min.

As shown clearly from the test results in Examples 1 to 5, the composites of the present invention have excellent stretching and gas barrier properties, sufficient heat shrinkability at 90 °C, good oil and heat seal resistance.

None of the composites in Reference Examples had neither satisfactory heat seal resistance nor oil resistance, because of insufficient curing from a low dose of radiation.

Utility of the present Invention

11

According to the first aspect of the invention, there can be provided a novel composite having excellent heat seal resistance and good oil resistance. The composite is useful as nonshrinkable packaging materials for chilled beef with or without being cured depending upon the purpose, and also utilized as sleeve and boiling packagings. The composite is constituted of at least two layers comprising a barrier substrate layer, and a layer of an ethylene copolymer resin having carbon-carbon unsaturated bonds or of a composition comprising the same.

According to the second aspect of the invention, there can be provided economically and safely a heat shrinkable composite film which is constituted of a barrier substrate layer, and of a layer of an ethylene copolymer resin having carbon-carbon unsaturated bonds or of a composition comprising the same and a nonrigid polyolefin resin.

The heat shrinkable composite film of the present invention can be cured under milder conditions in a shorter period of time in comparison with the conventional composite films, by use of ionic radiation without any deterioration of the barrier layer because of the susceptibility of the ethylene copolymer resin to curing. Because of this, the present invention can provide such composite films economically and safely.

By use of a composite comprising an ethylene copolymer having carbon-carbon unsaturated bonds and a nonrigid polyolefin resin, the heat shrinkable composite film of the present invention has excellent transparency and nonrigidity without impairing the characteristics of the present composites.

According to the third aspect of the invention, there can be provided a foamed composite or heat shrinkable foamed composite film having good insulating, shock absorbing prop erties and flexibility without impairing the barrier propert y, heat seal resistance and high shrinkability.

The composites according to the present invention have excellent gas and steam barrier properties, heat shrinkability at a low temperature, transparency, low temperature resistance, impact resistance, heat seal resistance, orientation stretching, flexibility, shock absorbing and insulating properties. Therefore, they are not only useful as chilled beef packaging materials, but also useful for retort food packaging, pouch packaging, coating and protecting materials for:

ham and sausages, processed fish, processed seafood products such as boiled fish paste, dried food for sprinkling, soup powder, parched rice cake, curry powder, spices, vegetables, fruits; phamaceuticals; metals; ceramic and electronic parts, automobile parts, furniture, household articles, bottles, platters, cans in the field such as fiber, electric and electronic, automobile, shipping, aircraft and architecture industry,and the like.

The composites of the present invention have excellent electrical properties, and they are useful as insulating materials for wires and cables, as coating materials for electrical parts such as jacket and welds.

## Claims

1. A composite constituted of a barrier substrate layer, and a layer of an ethylene copolymer resin having carbon-carbon unsaturated bonds or of a composition comprising the same and a polyolefin.

2. A heat shrinkable composite film constituted of a barrier substrate layer, and of a layer of an ethylene copolymer resin having carbon-carbon unsaturated bonds or of a composition comprising the same and a polyolefin.

3. A foamed composite having at least a foamed layer in the composite defined as in claim 1, or a heat shrinkable composite film having at least a foamed layer in the composite defined in claim 2.

# INTERNATIONAL SEARCH REPORT

International Application No  PCT/JP91/00014

## I. CLASSIFICATION OF SUBJECT MATTER (if several classification symbols apply, indicate all) [6]

According to International Patent Classification (IPC) or to both National Classification and IPC

Int. Cl$^5$  B32B5/18, B32B7/02

## II. FIELDS SEARCHED

### Minimum Documentation Searched [7]

| Classification System | Classification Symbols | |
|---|---|---|
| IPC | B32B5/18, B32B7/02, B32B15/08, B32B27/16, B32B27/28 -27/32 | |

### Documentation Searched other than Minimum Documentation to the Extent that such Documents are included in the Fields Searched [8]

| | | |
|---|---|---|
| Jitsuyo Shinan Koho | 1926 - 1989 | |
| Kokai Jitsuyo Shinan Koho | 1971 - 1989 | |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, A, 56-84949 (Asahi Dow Co., Ltd.), July 10, 1981 (10. 07. 81), Claim, lines 13 to 16, right column, page 1 (Family: none) | 1-2 |
| X | JP, A, 62-3948 (Union Carbide Corp.), January 9, 1987 (09. 01. 87), Claims 1 to 5 & US, A, 4714638 & EP, A3, 204918 & AU, A1, 5595686 & BR, A, 8601802 & ZA, A, 8602632 & ES, A1, 8802324 & NZ, A, 215759 | 1-2 |
| Y | JP, B2, 63-5262 (Sumitomo Bakelite Co., Ltd.), February 2, 1988 (02. 02. 88), Claim (Family: none) | 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 8, 1991 (08. 04. 91) | April 22, 1991 (22. 04. 91) |

| International Searching Authority | Signature of Authorized Officer |
|---|---|
| Japanese Patent Office | |

Form PCT ISA 210 (second sheet) (January 1985)